# EUROPEAN PATENT APPLICATION

(11) **EP 2 662 561 A1**
(43) Date of publication of application: **13.11.2013**
(21) Application number: 12167316.4
(22) Date of filing: 09.05.2012
(51) Int. Cl.: F03D 7/02, H02J 3/24, H02M 5/45, H02J 3/38

(54) **Method and arrangement for damping a shaft oscillation**

(71) Applicant: Siemens Aktiengesellschaft, 80333 München (DE)
(72) Inventor: Egedal, Per, 7400 Herning (DK); Kumar, Sathees, 7400 Herning (DK)

(57) **Abstract**

It is described a method for damping an oscillation of a rotational speed (167) of a shaft (129, 135) of a wind turbine (101) having a converter (141) connected between a generator (137) and a wind turbine output terminal (152), the method comprising: measuring the rotational speed (ω, 167) of the shaft (129) or the generator (137); determining a DC-link voltage reference (Udc_ref, 163) varying in dependence with the rotational speed (ω, 167); controlling a DC-link voltage (Udc) of a DC-link (145) of the converter (141) according to the DC-link voltage reference (Udc_ref, 163).

## Description

### Field of invention

The present invention relates to a method and an arrangement for damping an oscillation of a rotational speed of a shaft of a wind turbine and to a method for starting-up a wind turbine disconnected from any utility grid. Thereby, in particular, the wind turbine may supply electric energy to one or more other wind turbines.

### Art Background

In an event in which all power production units, such as wind turbines, are shut down, e.g. due to problems in the utility grid which has therefore been disconnected from the wind turbines, it may be necessary to re-start the power production units, in particular the wind turbines. Thereby, the process of restoring the power system, i.e. starting-up the power production units, in particular wind turbines, is referred to as black start. It may be necessary to perform the black start in a rapid manner, in order to deliver electric energy to the utility grid as soon as possible, in order to meet energy demands by the consumer connected to the utility grid.

During disconnection from the utility grid the wind farm and each individual wind turbine comprised in the wind farm may not be able to operate, since there is a missing supply voltage for supplying electric energy to auxiliary components of the wind turbine. Further, even if the wind turbine would be able to produce electric energy the electric energy would not be able to be delivered to a consumer or to a load.

In particular, the wind park comprising of a number of wind turbines may be completely disconnected from the utility grid, thus may be in an island mode subsequently shutting down the wind turbines. Further, auxiliary components, such as motors, pumps, cooling, in particular yawing motors or pitching motors, may be disengaged prohibiting the wind turbine to operate in a normal production mode. Thereby, supply of electric energy to consumers may be prohibited, resulting in a loss of profit.

Thus, a quick restoration including starting-up of the wind turbines is desired after a blackout.

US 2011/0291416 A1 discloses a use of pitch battery power to start wind turbines during grid loss/black start capability, wherein a blade pitch drive of the wind power plant is powered by an energy storing unit and a rotor shaft enters a self-sustaining power generation mode upon adjustment of the pitch of the blade.

US 2008/0284172 A1 discloses a method of start-up at least a part of wind power plant substantially without any energy delivered from the external grid, wherein at least one power source is connected to at least one of the wind turbines in order to start the wind turbine while isolated from the remaining wind turbines.

There may be a need for a method and for an arrangement for damping an oscillation of a rotational speed of a shaft of a wind turbine and there may be a need for a method for starting-up a wind turbine disconnected from any utility grid, wherein the method is more effective, in order to ensure a proper operation and safe operation of the wind turbine and in order to accelerate normal power production by the wind turbines.

The need is satisfied by the subject-matter of the independent claims. The dependent claims specify particular embodiments of the present invention.

### Summary of the Invention

According to an embodiment of the present invention it is provided a method for damping (in particular reducing an amplitude of) an oscillation of a rotational speed of a shaft of a wind turbine having a converter connected between a generator and a wind turbine output terminal, the method comprising measuring the rotational speed of the generator and/or the shaft, determining a DC-link voltage reference varying in dependence with the rotational speed, and controlling a DC-link voltage of a DC-link of the converter according to the DC-link voltage reference.

The rotational speed of the generator and/or the shaft may be represented by a rotational speed of the generator of the wind turbine or the rotational speed of the main shaft or any intermediate shaft between the main shaft of the wind turbine at which plural rotor blades are fasten and the generator of the wind turbine. The main shaft of the wind turbine may also be referred to as simply the shaft of the wind turbine.

The rotational speed of the generator of the shaft may oscillate, thus may vary with time. In particular, the rotational speed may periodically vary with time. In particular, the periodicity of the variation of the rotational speed of the shaft may correspond to a resonance frequency of the shaft (and/or the whole drive train including one or more shafts, a gear box, and the generator).

The resonance frequency (of the shaft of the drive train) may comprise several orders of resonance frequencies, such as a first order, a second order, a third order and so forth, in particular depending on a number of rotor blades which are fastened to the shaft. Oscillation of the rotational speed of the shaft may impair the operation of the wind turbine, in particular regarding mechanical load exerted on components of the drive train, such as a gear box, mechanical bearing and so on.

Damping the oscillation of the rotational speed may involve reducing an amplitude (in particular at a particular frequency) of the oscillation of the rotational speed.

The converter may in particular comprise a AC-DC-AC converter, which may on one hand be connected to the generator output terminal and may on the other hand be connected to a wind turbine output terminal. The converter may convert a variable frequency power stream (delivered from the generator of the wind turbine) to a fixed frequency power stream (to be delivered to the utility grid). The converter may in particular comprise three portions, in particular a AC-DC converter portion, a DC-link portion and a DC-AC converter portion. The converter portions may be controlled by respective controllers. In particular, the AC-DC converter portion and also the DC-AC converter portion may each comprise a number of power transistors, such as isolated gate bipolar transistors (IGBTs) which may be controlled at their respective gates by pulse width modulation signals generated and supplied from the respective controllers.

The rotational speed of the shaft or generator may be measured for example by an encoding wheel directly at the shaft. Alternatively, the rotation speed of the shaft may be derived from a corresponding rotational speed of another shaft in between the main shaft and the generator or may be related to the rotational speed of the generator. Thereby, a transformation ratio introduced by a potentially present gear box may be taken into account.

The rotational speed may be continuously measured, such as every 10 ms, every 15 ms, every millisecond to obtain plural samples of the rotational speed at different time points.

The determined DC-link voltage reference may vary with a same frequency as the rotational speed. However, the DC-link voltage reference may have a different amplitude and may have also a different phase than the measured rotational speed. In particular, amplitude and phase of the DC-link voltage reference may be adjusted such that a damping effect of the DC-link voltage reference when supplied to a DC-link controller is maximized.

The DC-link voltage may be the voltage across the DC-link converter portion of the converter, wherein the DC-link may be arranged between the AC-DC converter portion and the DC-AC converter portion of the converter. In particular, due to the controlling, the (actual) DC-link voltage may vary with a same frequency as the measured rotational speed of the shaft. Thereby, a damping of the oscillation of the rotational speed of the shaft may be damped by reducing in particular the amplitude of the oscillation. Thereby, a safe operation of the wind turbine, in particular during a start-up, in particular a black start, may be improved or ensured.

According to an embodiment of the present invention the determining the DC-link voltage reference comprises determining a signal based on the rotational speed; adding the signal to a preliminary, in particular constant, DC-link voltage reference to obtain the DC-link voltage reference.

The determined signal may vary with the same frequency as the rotational speed. The signal may, however, have a different amplitude and/or different phase than the rotational speed. In particular, the signal may comprise an AC-component of the measured rotational speed, in which a DC-portion of the rotational speed, i.e. the constant portion, has been reduced or even eliminated. For determining the signal a processor, in particular programmable processor in which a program is running, may be used. The signal may be in particular a voltage signal.

In a conventional method or wind turbine the preliminary, in particular constant, DC-link voltage reference may be supplied to the controller of the DC-link. However, according to this embodiment of the present invention the determined signal is added to the preliminary DC-link voltage reference and the resulting DC-link voltage reference (comprising a contribution of the determined signal) may then be supplied to the controller of the DC-link. Thereby, damping of the oscillation of the rotational speed may be achieved in a simple manner.

According to the embodiment of the present invention the determining the signal comprises high pass filtering the rotational speed; and/or performing a gain to the rotational speed, in particular to the filtered rotational speed.

High pass filtering may comprise running the signal, in particular voltage signal, through one or more electronic filters, wherein these one or more filters allow high frequency components of the signal to be transmitted but decrease amplitudes of low frequency components of the signal. In particular, high pass filtering may involve reducing the DC-portion of the rotational speed. Thereby, the oscillation of the rotational speed may be reduced in a more efficient manner. Performing the gain may involve altering the amplitude of the varying rotational speed, in particular the filtered rotational speed. Thereby, the signal may be appropriately conditioned to effect the damping of the oscillation of the rotational speed when added to the preliminary DC-link voltage reference and supplied to a controller of the DC-link.

According to an embodiment of the present invention the determining the signal further comprises phase shifting the signal such that the resulting DC-link voltage reference has a damping effect on shaft oscillation, in particular at a resonance frequency. Phase shifting the signal may involve altering the phase such that a counter acting effect is achieved for reducing the oscillation of the rotational speed.

According to an embodiment of the present invention the controlling the DC-link voltage comprises supplying the DC-link voltage reference to a DC-link controller.

The DC-link controller may be adapted to adjust the DC-link voltage to approach or be equal to the DC-link voltage reference. The DC-link may comprise a capacitor connected between a first DC-link terminal and a second DC-link terminal. The DC-link voltage may be present between the first DC-link terminal and the second DC-link terminal. The first DC-link terminal and the second DC-link terminal may be the output terminals of the AC-DC converter portion and may at the same time the input terminals of the DC-AC converter portion of the converter of the wind turbine.

The DC-link controller may control the current, and/or torque and/or Power of the generator to keep the DC-link voltage at the DC voltage reference value.

According to an embodiment of the present invention the DC-link voltage reference is changed with an optimum magnitude and phase delay with respect to the measured oscillations in the generator speed, in order to achieve an effective damping effect.

According to an embodiment of the present invention the method for damping the oscillation of the rotational speed of the shaft further comprises exchanging power between a drive train of the wind turbine and a DC-link capacitor of the DC-link.

The drive train may comprise one or more shafts directly or indirectly connected to the main shaft and one or more gear boxes and also one or more bearings. In particular, the power exchange between the drive train and the DC-link capacitor may vary with a same frequency as the rotational speed. In particular, for loading the DC-link capacitor more power may be withdrawn from the shaft than upon discharging the DC-link capacitor. Thereby, the shaft of the wind turbine may be decelerated or accelerated in a varying manner, in order to damp the oscillation of the rotational speed.

According to an embodiment of the present invention the method for damping the oscillation of the rotational speed further comprises determining a current reference based on the DC-link voltage reference, supplying the current reference to the generator such that the generator varies a torque acting on the shaft in dependence with the rotational speed.

In particular, the torque acting on the shaft may vary with a same frequency as the rotational speed. The acting torque may decelerate and accelerate the shaft and particular time points, in order to damp the oscillation of the rotational speed of the shaft. Thereby, the damping of the oscillation may be performed indirectly using the generator.

According to an embodiment of the present invention the method is performed during a situation where the wind turbine is not connected to any utility grid.

In particular, the wind turbine is not supplied with electric energy but operates in a self-sustained mode. Further in particular, the wind turbine may supply electric energy to one or more other wind turbines. Initially, for starting-up the wind turbine, the wind turbine may have been connected to a Diesel generator which may feed power to the control system, yaw motors, heater, cooling, DC-link pre-charging etc. of the wind turbine. Thereby, the wind turbine may perform essential operations in order to start energy production, in order to satisfy its own energy demand. If the own energy demand is satisfied, the Diesel generator may be switched off.

According to an embodiment of the present invention the wind turbine acts as a voltage source for providing energy to at least one other wind turbine (of the wind park), wherein in particular any Diesel generator is disconnected from the wind turbine. In particular, the wind turbine may act as a master wind turbine allowing one or more other wind turbines to start-up by supplying electric energy to the one or more other wind turbines. Thereby, a wind park may be started-up in a black start in an efficient and fast manner.

According to an embodiment of the present invention the power output of the wind turbine is not controlled. Instead, the wind turbine may act as a voltage source (in particular providing constant voltage) and may provide any current which is demanded. In particular, the voltage supplied by the wind turbine and its output terminal may be substantially constant.

According to an embodiment of the present invention it is provided a method for starting up a wind turbine disconnected from any utility grid, the method comprising: supplying electric power from an external power supply to the wind turbine to drive an auxiliary system, yawing the wind turbine into the wind, pitching blades connected to a shaft into the wind, to allow start of rotation of the shaft, and performing a method according to an embodiment as described above for damping an oscillation of a rotational speed of the shaft.

The external power supply may be or may comprise a Diesel generator, any other combustion engine, a battery, an accumulator, a solar energy production unit or the like. The auxiliary system may in particular comprise a yawing actuator and a blade pitch actuator. Thereby, the wind turbine may slowly produce energy upon starting the rotation of the shaft.

However, an oscillation of the rotational speed of the shaft may be detected or may occur, which may require damping the oscillation in order to smoothly complete the start-up of the wind turbine. Since the wind turbine may act as a voltage source it may not be possible to control the power output of the wind turbine, in order to damp the oscillation which may have being done in a conventional wind turbine and a conventional method for starting-up a wind park. Therefore, instead, the DC-link voltage reference is varied in accordance to the varying rotational speed, in order to damp the oscillation of the rotational speed of the shaft.

Thereby, a proper operation of the wind turbine may be ensured and the start-up of the wind turbine and the start-up of the whole wind turbine wind park may be facilitated.

It should be understood that features individually or in any combination disclosed, described, explained, mentioned or provided for a method for damping an isolation of a rotational speed of a shaft of a wind turbine may also be applied, used for or employed for an arrangement for damping an oscillation of a rotational speed of a shaft of a wind turbine according to an embodiment of the present invention and vice versa.

According to an embodiment of the present invention it is provided an arrangement for damping an oscillation of a rotational speed of a shaft of a wind turbine having a converter connected between a generator and a wind turbine output terminal, the arrangement comprising: an input terminal for obtaining a measuring signal of the rotational speed of the generator and/or the shaft; a determining section for determining a DC-link voltage reference varying in dependence with the rotational speed; and an output terminal for controlling a DC-link voltage of a DC-link of the converter according to the DC-link voltage reference.

The arrangement may be a separate module separated from other modules of the turbine or may be integrated in one or more controllers of the wind turbine.

Embodiments of the present invention are now described with reference to the accompanying drawings. The invention is not limited to the illustrated or described embodiments.

### Brief Description of the Drawings

- Fig. 1: schematically illustrates a wind park comprising one wind turbine performing a method according to an embodiment of the present invention and comprising an arrangement according to an embodiment of the present invention;
- Fig. 2: illustrates a graph for explaining a method according to an embodiment of the present invention; and
- Fig. 3: illustrates a graph for explaining a method according to an embodiment of the present invention.

### Detailed Description

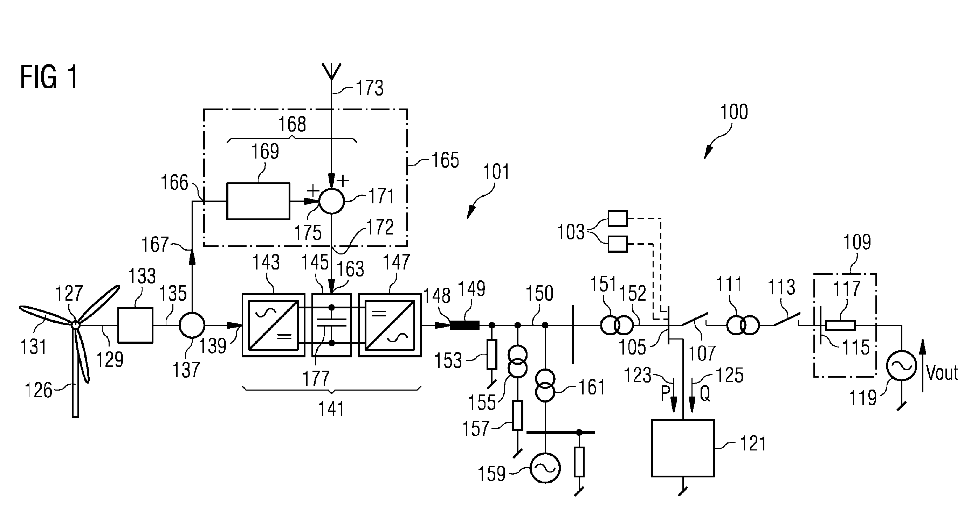

**Fig. 1** illustrates a wind park 100 comprising a wind turbine 101 performing a method according to an embodiment of the present invention and comprising an arrangement according to an embodiment of the present invention. The wind turbine 101 and (one or more) other wind turbines 103 are connected or connectable to a point of common coupling 105 which is via a switch 107 and via a high voltage (park) transformer 111 and a switch 113 connectable to a utility grid 109 which may comprise, a connection node 115 and may be modeled using an impedance 117, wherein an external power source 119 may be connected to the utility grid 109.

The wind park 100 is adapted for grid island commissioning (GIS), wherein it is enabled to test/commission the wind turbine 101 and the other wind turbine 103, even if there isn't any external grid 109 available, such as when the switch 107 and/or the switch 113 is open for any fault reason. In particular, when all the wind turbines 101, 103 are setup and ready for power production, but the connection to the utility grid 109 is still broken or opened, a load 121 may be connected to the respective wind turbine under test. Thereby, active power 123 or reactive power 125 delivered by the respective wind turbine to be tested may be absorbed by the load 121.

Further, the wind park 100, in particular the wind turbine 101 is adapted for grid offline service (GOS), wherein the wind turbine 101 is configured to act as a voltage source and thereby provide the required auxiliary power for itself and for the rest of the wind park 110, i.e. for the other wind turbines 103. Thereby, the other wind turbines 103 may be kept ready for power production as the heaters, cooling system, dehumidifier etc. are able to operate during loss of a connection to the utility grid 109.

The functions of grid offline service (GOS) and grid island commissioning (GIS) are further described below.

The wind turbine 101 comprises a wind turbine tower 126 on top of which a nacelle 127 is mounted which rotatably supports a shaft 129 to which plural rotor blades 131 are connected. The shaft 129 (also referred to as main shaft) is mechanically connected to a gear box 133, which transforms the rotational speed of the shaft 129 to the rotational speed of the generator via a secondary shaft 135. Thereby, the secondary shaft 135 is mechanically connected to the generator 137.

The generator 137 delivers a power stream 139 to a converter 141. The converter 141 comprises a AC-DC converter portion (also referred to as generator bridge) 143, a DC-link 145 and a DC-AC converter portion 147 (also referred to as network bridge). The converter 141 delivers, using a bar 150, a fixed frequency power stream 148 via a reactor 149 and a wind turbine transformer 151 to a wind turbine output terminal 152 and from there the point of common coupling 105. For filtering a filter 153 is connected to the reactor 149 and a ground terminal.

Further, there is connected to the bar 150 an auxiliary transformer 155 connected to an auxiliary equipment 157 of the wind turbine, such as a yaw motor, a pitch motor, a cooling system and the like. Thus, under normal conditions the wind turbine 101 may power its own auxiliary equipment 157 by the power stream 148 output by the converter 141.

The wind park 100 further comprises (in particular for each of the wind turbines 101, 103) a energy source 159, which may be for example a Diesel generator which is connected via a generator transformer 161 to the bar 150 connected to the reactor 149. Via the Diesel generator 159 and via the generator transformer 161 the auxiliary equipment 157 of the wind turbine 101 may be provided with electric energy during disconnection to the utility grid 109.

In the following, the function or the capability of the grid offline service (GOS) is described in more detail. The wind farm 101 may be not connected to the high voltage grid or utility grid 109 as a black-out has occurred. Thus, the wind turbine 101 and also the whole wind park 100 comprising also the other wind turbines 103 have become isolated from the high voltage side of the wind park transformer 111.

The Diesel generator 159 which is connected to the low voltage bus 150 feeds power to the auxiliary equipment 157 of the wind turbine 101, such as yaw motors, heater, cooling, DC-link precharging etc. Thereby, the wind turbine 101 will try to yaw into a direction with the wind and once this has happened the blades will be slowly pitched into the wind such that the rotor 129 starts to rotate. Thereby, the wind turbine transformer 151 may not be connected.

The turbine power reference is then set to 0 kW and the reactive power reference is set to 0 kVAr. Thereby, the wind turbine 101 is operated in normal operation mode. The converter PLL synchronizes to the low voltage bus bar voltage created by the Diesel generator 159. The drive train 129, 133, 135 power is absorbed by auxiliary and Diesel generator losses. A two voltage source system with a reactance in between where power flow depends on a phase angle between the two sources should be avoided and hence the Diesel generator is disconnected, when the converter 141 acts as a voltage source.

While the wind turbine 101 is acting as a voltage source (in particular also providing electric energy to the other wind turbine 103) the shaft 129 may rotate with a varying rotational speed and will require damping the oscillation of the rotational speed. Since the wind turbine 101 is acting as a voltage source, active power control of the wind turbine may not be employed for damping the oscillation of the rotational speed. According to an embodiment of the present invention the damping of the oscillation of the rotational speed of the shaft 129 is performed by varying the DC-link-voltage reference 163 which is supplied to the DC-link 145, in particular to a DC-link controller.

For this purpose the wind turbine comprises an arrangement 165 for damping the oscillation of the rotational speed of the shaft 129. The arrangement 165 comprises an input terminal 166 for obtaining a measuring signal 167 of the rotational speed of the shaft 129 or the generator 137, which may in particular be represented as the rotational speed of the generator 137. Further, the arrangement 165 comprises a determining section 168 for determining the DC-link voltage reference 163 varying independence with the rotational speed. In particular, the arrangement 165 comprises a processing section 169 and an addition element 171, wherein a preliminary DC-link voltage reference 173 is added to a signal 175 which has been determined based on the rotational speed 167 by the processing section 169.

In particular, the processing section 169 performs a high pass filtering and also an amplification of the rotational speed signal 167. In particular, the rotational speed 167 of the generator is measured and high pass filtered, to give the AC-component containing the resonance frequency of the shaft 129 or 135. The high pass filtered signal is then fed through a gain (e.g. amplifier) where the output of the gain is a AC component ΔU (or signal 175), which is then added to the preliminary DC-link voltage reference Udc_ref_preliminary (also signal 173). Thus, shaft damping is achieved by control of the DC-link voltage reference. That means that the DC-link voltage reference 163 is increased, when the rotational speed 167 increases and the DC-link voltage reference 163 is decreased when the rotational speed 167 decreases. Power is thereby interchanged back and forth between the drive train 129, 133, 135 and a DC-link capacitor 177.

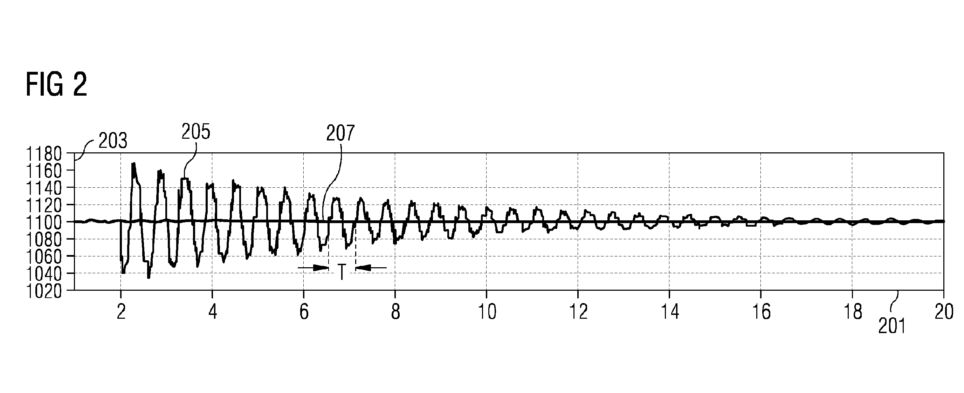

**Fig. 2** illustrates a graph for explaining a method according to an embodiment of the present invention. On an abscissa 201 the time in seconds is indicated, while on an ordinate 203 the DC-link voltage across the DC-link 145 is indicated. The curve 205 illustrates the DC-link voltage Udc, while the damping is applied as explained above, whereas the curve 207 illustrates the DC-link voltage when no damping is performed. As can be seen, the DC-link voltage 205 varies periodically having a period T, which in particular corresponds to a resonance frequency of the shaft 129 or the secondary shaft 135.

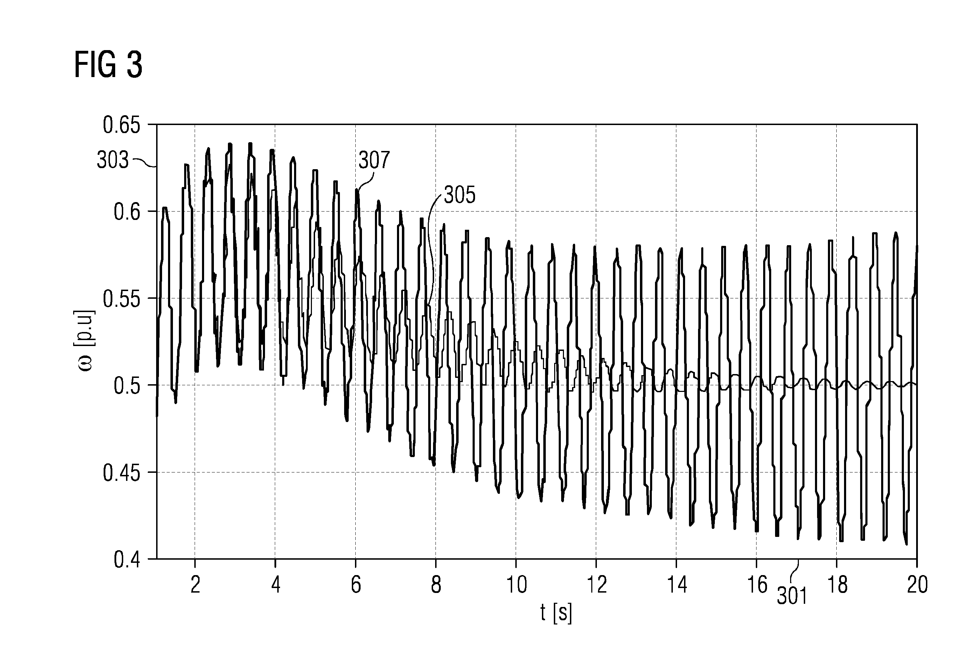

**Fig. 3** illustrates a graph for explaining the damping according to a method according to an embodiment of the present invention. On an abscissa 301 the time in seconds is indicated while on an ordinate 303 the rotational speed of the shaft 129 or 135 is indicated in units of the rated rotational speed. Thereby, the speed reference has been set to 0.5 per unit in the situation simulated in the graph of Fig. 3. The curve 305 (the curve having the smaller amplitude) shows the rotational speed when the damping is performed by varying the DC-link voltage reference, whereas the curve 307 shows the rotational speed when no damping is performed.

As can be seen the curve 307 (without damping) exhibits much larger amplitude than the curve 305 applying the damping according to an embodiment of the present invention. Thus, without damping the system becomes unstable. The rise in speed during the first three seconds is due to the initialization.

In the following the capability of the grid island commission (GIS) are explained in some more detail. First, the external power supply 159 may be used to feed the auxiliary equipment 157 of the wind turbine 101 and setup a voltage on the low voltage bus bar 150. Now, the wind turbine 101 can startup in a standard mode whereupon the Diesel generator 159 may be disengaged. Power 123, 125 produced by the wind turbine 101 is absorbed by the load bank 121. Thereby, the correct operation of the wind turbine 101 may be tested or checked. Once the wind turbine 101 is commissioned, the other wind turbines 103 may be commissioned or tested one by one.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for damping an oscillation of a rotational speed (167) of a shaft (129, 135) of a wind turbine (101) having a converter (141) connected between a generator (137) and a wind turbine output terminal (152), the method comprising:
measuring the rotational speed (ω, 167) of the shaft (129) or the generator (137);
determining a DC-link voltage reference (Udc_ref, 163) varying in dependence with the rotational speed (ω, 167);
controlling a DC-link voltage (Udc) of a DC-link (145) of the converter (141) according to the DC-link voltage reference (Udc_ref, 163).

2. Method according to claim 1, wherein the determining the DC-link voltage reference comprises:
determining a signal (ΔU, 175) based on the rotational speed (cm, 167);
adding (171) the signal (ΔU, 175) to a preliminary, in particular constant, DC-link voltage reference (Udc_ref_preliminary, 173) to obtain the DC-link voltage reference (Udc_ref, 163).

3. Method according to claim 2, wherein the determining the signal comprises:
high pass filtering the rotational speed (ω, 167); and/or
performing a gain to the rotational speed (ω, 167), in particular to the filtered rotational speed.

4. Method according to claim 2 or 3, wherein the determining the signal comprises:
phase shifting the signal (ΔU, 175) such that the resulting DC-link voltage reference has a damping effect on shaft oscillation, in particular at a resonance frequency.

5. Method according to one of the preceding claims, wherein the controlling the DC-link voltage comprises:
supplying the DC-link voltage reference (Udc_ref, 163) to a DC-link controller (145).

6. Method according to one of the preceding claims, wherein the DC-link voltage is changed with an optimum magnitude and phase delay with respect to the measured oscillations in the generator speed.

7. Method according to one of the preceding claims, further comprising:
exchanging power between a drive train (129, 133, 135) of the wind turbine (101) and a DC-link capacitor (177) of the DC-link (145).

8. Method according to one of the preceding claims, further comprising:
determining a current reference based on the DC-link voltage reference;
supplying the current reference to the generator (137) such that the generator varies a torque acting on the shaft in dependence with the rotational speed.

9. Method according to one of the preceding claims, performed during a situation where the wind turbine is not connected to any utility grid (109).

10. Method according to one of the preceding claims, wherein the wind turbine (101) acts as a voltage source for providing energy to at least one other wind turbine (103), wherein in particular any diesel generator (159) is disconnected from the wind turbine.

11. Method according to one of the preceding claims, wherein power output of the wind turbine (101) is not controlled.

12. Method for starting up a wind turbine (101) disconnected from any utility grid, the method comprising:
supplying electric power from an external power supply (159) to the wind turbine (101) to drive an auxiliary system (157);
yawing the wind turbine into the wind;
pitching blades (131) connected to a shaft (129) into the wind, to allow start of rotation of the shaft;
performing a method according to one of the preceding claims for damping an oscillation of a rotational speed (167) of the shaft (129, 135) or the generator (133).

13. Arrangement (165) for damping an oscillation of a rotational speed (ω, 167) of a shaft (129, 135) or a generator (137) of a wind turbine (101) having a converter (141) connected between a generator (137) and a wind turbine output terminal (152), the arrangement comprising:
an input terminal (166) for obtaining a measuring signal (ω, 167) of the rotational speed of the shaft (129, 135) or the generator (137);
a determining section (168) for determining a DC-link voltage reference (Udc_ref, 163) varying in dependence with the rotational speed (ω, 167);
an output terminal (172) for controlling a DC-link voltage of a DC-link (145) of the converter (141) according to the DC-link voltage reference (Udc_ref, 163).

14. Wind turbine, comprising the arrangement according to claim 13.
